# EUROPÄISCHE PATENTSCHRIFT

(11) **EP 0 409 085 B1**
(45) Veröffentlichungstag und Bekanntmachung des Hinweises auf die Patenterteilung: **02.03.1994**
(21) Anmeldenummer: 90113361.1
(22) Anmeldetag: 12.07.1990
(51) Int. Cl.: B23Q 7/00

(54) **Palettenwechsler für Werkzeugmaschinen**
Palette changing apparatus for machine tools
Echangeur de palettes pour machines-outils

(30) Priorität: 17.07.1989 DE 3923574
(43) Veröffentlichungstag der Anmeldung: 23.01.1991
(73) Patentinhaber: MAHO Aktiengesellschaft, D-87459 Pfronten (DE)
(72) Erfinder: Babel, Werner, D-8962 Pfronten (DE)
(74) Vertreter: Beetz & Partner Patentanwälte

(56) Entgegenhaltungen:
- EP-A- 0 111 368
- EP-A- 0 281 664
- DE-A- 3 541 600

## Beschreibung

Die Erfindung betrifft einen Palettenwechsler für Werkzeugmaschinen der im Oberbegriff des Patentanspruchs 1 angegebenen Gattung.

Aus der DE-OS 35 41 600 ist ein derartiger Palettenwechsler bekannt, der eine zwischen der Werkzeugmaschine und einem Palettenablagetisch angeordnete Übergabevorrichtung aufweist. Die Übergabevorrichtung enthält einen 180 ° verdrehbaren Drehkörper, an dem zwei diametral gegenüberliegende Z-förmig ausgebildete Mitnehmer vertikal verschiebbar geführt sind. Am Unterschenkel des Mitnehmers sind zapfenförmige Führungsbolzen vorgesehen, die formschlüssig in entsprechend ausgerichtete Bohrungen an der Stirnseite der Paletten eingreifen. Auf dem Paletten-Ablagetisch sind ferner kreissegmentförmig angeordnete Führungsleisten vorgesehen, die zusammen mit entsprechenden, auf dem Aufspanntisch der Werkzeugmaschine ausgebildeten Führungsleisten in der Wechselposition eine durchgehende Führungsfläche bilden, die zur Abstützung der Palette während des gesamten Palettenwechsels dient. Die an den Mitnehmern angeordneten Führungsbolzen übernehmen eine Führungsfunktion, während die vertikale Abstützung der Paletten durch die kreisförmig angeordneten Führungsleisten erfolgt.

Eine aus der DE-PS 31 34 833 bekannte Palettenwechseleinrichtung weist eine seitlich an einem Maschinenschlitten befestigte und um die Vertikalachse verdrehbare Hubeinrichtung auf. Diese Hubeinrichtung enthält einen einseitig auskragenden gabelförmigen Palettenträger, der jeweils eine Palette untergreift und schräg anhebt. Ein an der Hubeinrichtung angeordnetes Zahnradgetriebe kämmt mit einer am Maschinenschlitten angeordneten Zahnstange, so daß bei der Verfahrbewegung des Schlittens die Drehung der Hubeinrichtung erfolgt.

Aus der EP-A- 224 931 ist ein weiterer Palettenwechsler bekannt, dessen Drehkörper an zwei gegenüberliegenden Seiten jeweils eine T-förmige Vertikalnut aufweist, in die ein entsprechend ausgebildetes und seitlich an den Paletten angeordnetes Adapterstück eingreifen kann. Durch zwei unabhängig voneinander wirksame Hebevorrichtungen werden die Paletten angehoben, wobei deren Adapterstücke in Eingriff mit den Nuten am Drehkörper gelangen. Während des Palettenwechsels erfolgt die vertikale Abstützung der beiden Paletten über mehrere kreisbogenförmige Tragschienen mit Führungsrollen, was einen relativ hohen räumlichen und konstruktiven Aufwand erfordert. Ferner müssen sowohl die Führungsrollen als auch die Führungsflächen an der Palettenunterseite von den bei der Bearbeitung anfallenden Spänen geschützt werden, was in der Regel teure Abstreifelemente oder entsprechende Abdeckungen erfordert.

Aufgabe der Erfindung ist es, einen konstruktiv einfach aufgebauten Palettenwechsler zu schaffen, der bei geringem Platzbedarf eine schnelle postitionsgenaue Überführung der Paletten ohne zusätzliche Abstützelemente ermöglicht und unempfindlich gegen die beim Bearbeitungsprozeß anfallenden Späne bzw. Verunreinigungen ist.

Diese Aufgabe wird erfindungsgemäß durch die Merkmale des Patentanspruchs 1 gelöst.

Durch die erfindungsgemäße Ausbildung der Halteelemente können diese zusätzlich zur seitlichen Führung eine Tragfunktion in der vertikalen Richtung übernehmen. Bei einem Werkstückwechsel gelangen die leistenförmigen Ansätze durch die vertikale Hubbewegung des Drehkörpers in Eingriff mit den Tragprofilen an den Paletten, wobei die auf dem Werkstücktisch angeordnete Palette aus ihren Aufnahmeelementen und gleichzeitig die in der Standby-Position befindliche Palette angehoben werden.

Beide Paletten werden freitragend an den seitlich angeordneten Tragprofilen gehalten, so daß auch bei dem nachfolgenden Schwenkvorgang des Drehkörpers um 180 ° keine zusätzlichen Abstützelemente für die Paletten erforderlich sind. Die mit den leistenförmigen Ansätzen zur Anlage gelangenden Flächen der Tragprofile befinden sich an deren nach unten offenen Innenseiten und sind somit gegen ein Eindringen von Spänen geschützt. Durch die leistenförmige Ausbildung der Ansätze am Drehkörper erfolgt eine Verteilung der am Anhebevorgang auf die Halteelemente wirksamen Kräfte und Kippmomente.

In einer zweckmäßigen Ausgestaltung weist der Drehkörper vertikale Führungsnuten auf, in die beim Anheben jeweils ein an dem Tragprofil angeordneter Führungsbolzen eingreift, dessen Durchmesser der Breite der Führungsnut entspricht. Durch diese Ausführung wird eine konstruktiv einfache Führung der Paletten an den Drehkörpern erreicht, die eine seitliche Verschiebung der Paletten während des Schwenkvorgangs verhindert.

In einer weiteren vorteilhaften Ausführung ist die vertikal verstellbare Tragsäule an der Werkzeugmaschine befestigt. Daraus ergibt sich eine genaue Festlegung der Übergabeposition zwischen Werkstücktisch und Drehkörper und ein geringer Platzbedarf.

Um bei Werkzeugmaschinen mit weit nach vorne herausragendem Betteil die Standby-Position möglichst nahe an der Maschine anzuordnen, ist der Drehkörper am freien Ende eines in Richtung des Werstücktisches weisenden und an der Tragsäule befestigten Kragarms ausgebildet.

Weitere Besonderheiten und Vorzüge der Erfindung ergeben sich aus der folgenden Beschreibung eines bevorzugten Ausführungsbeispiels anhand der Zeichnung. Es zeigen:
- Fig. 1: eine perspektivische Ansicht eines an einer Werkzeugmaschine angeordneten Palettenwechslers,
- Fig. 2: eine vergrößerte Darstellung einer Drehvorrichtung.

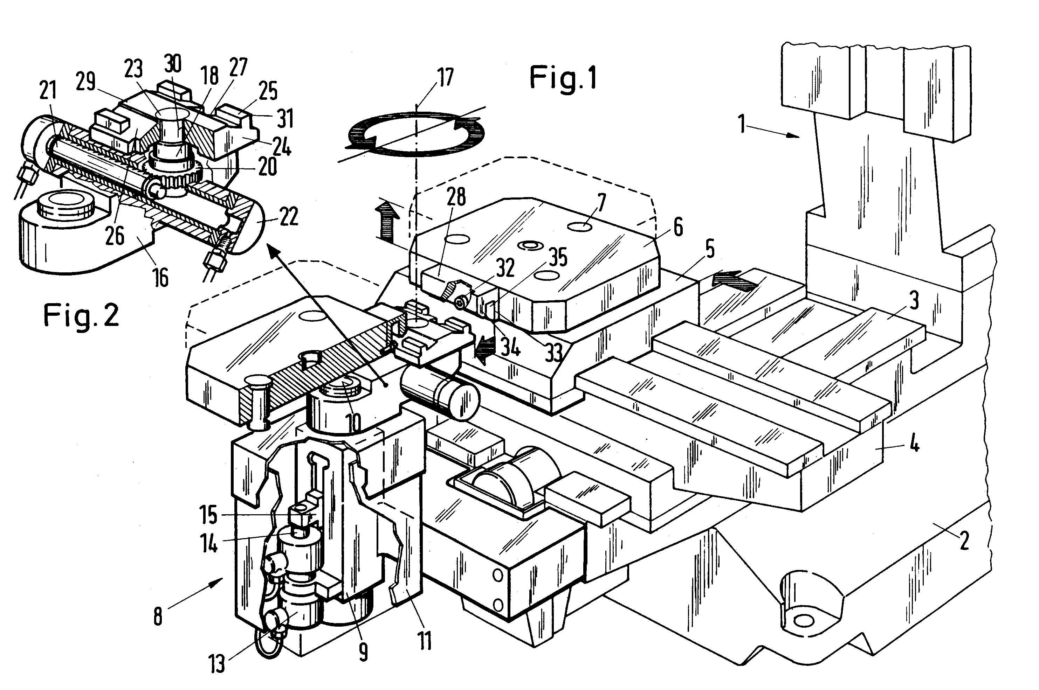

Die Fig. 1 zeigt ein Maschinenbett 2 einer Werkzeugmaschine 1, welche eine Längsführung 3 für einen Schlitten 4 aufweist. Auf dem Schlitten 4 ist ein Werkstücktisch 5 quer zur Längsführung 3 verschiebbar angeordnet, auf dem eine Werkstückpalette 6 durch eine formschlüssige Verbindung fixiert wird. Die formschlüssige Verbindung umfaßt drei in der Werkstückpalette 6 dreiecksförmig angeordnete Fixierbolzen 7, deren freien Enden die Palette 6 nach unten durchragen und in - nicht dargestellte - Aufnahmebohrungen im Werkstücktisch 5 eingreifen. Eine derartige Verbindung zwischen Werkstückpalette 6 und Werkstücktisch 5 zeichnet sich durch genaue Positionierung, einfache Lösbarkeit und Unempfindlichkeit gegen Verschmutzung aus, weil die Verbindungselemente während der Bearbeitung von der Werkstückpalette abgedeckt sind.

Der eigentliche Palettenwechsler 8 umfaßt eine Tragkonstruktion 9 mit einer motorisch heb- und absenkbaren Tragsäule 10. Diese Tragsäule 10 ist in der stirnseitig am Maschinenbett 1 montierten Tragkonstruktion 9 vertikal verschiebbar geführt. Die vertikale Verschiebung der Tragsäule 10 zwischen zwei Endlagen erfolgt durch einen an der Tragkonstruktion 9 befestigten Linearmotor, z. B. einen Hydraulikzylinder 13, dessen Kolbenstange 14 mit einem seitlich an der Tragsäule 10 befestigten Schieber 15 verbunden ist. Die Tragkonstruktion 9 und der daran angeordnete Hydraulikzylinder 13 sind von einem Gehäuse 11 umgeben.

Am freien Ende der Tragsäule 10 ist ein Kragarm 16 fest montiert, in dessen freiem dem Werkstücktisch zugewandten Ende eine um die vertikale Hochachse 17 verdrehbare Antriebswelle 18 mit einem Drehkörper 24 gelagert ist. Am anderen Ende des Kragarms 16 ist eine zylindrische Aufnahme ausgebildet, in der das freie Ende der vertikal beweglichen Tragsäule 10 drehfest aufgenommen ist. Wie insbesondere aus Fig. 2 ersichtlich, erfolgt die Verdrehung der Antriebswelle 18 bei dem dargestellten Ausführungsbeispiel über einen Zahnantrieb 20, 21. Ein auf der Antriebswelle befestigter und im Kragarm 16 angeordneter Zahnkranz 20 steht in Eingriff mit einer Zahnstange 21, die als Kolben einer quer im Kragarm angeordneten doppelt wirkenden Zylindereinheit 22 ausgebildet ist. Das nach oben aus dem Kragarm 16 ragende freie Wellenende 23 der Antriebswelle 18 trägt einen Drehkörper 24.

Wie in Fig. 2 dargestellt, hat der rechteckige Drehkörper 24 einen erhöhten Mittelsteg 29, an den sich zwei zu den beiden Längsseiten abfallende Schrägflächen 26 anschließen. Im Mittelsteg 29 ist mittig eine Bohrung 30 zur Aufnahme des Wellenendes 23 der Antriebswelle 18 vorgesehen. Der Drehkörper 24 weist im Eckenbereich senkrecht nach oben ausgerichtete und diametral gegenüberliegende Traghaken 25 in Form von schmalen leistenförmigen Ansätzen mit seitlichen Anlageflächen 31 auf. Ferner sind an den gegenüberliegenden den Paletten zugewandten Längsseiten des Drehkörpers 24 mittige Führungsnuten 27 ausgebildet, in die beim Palettenwechsel ein innerhalb eines Tragprofils 28 angeordneter Führungsbolzen 32 eingreift.

Das seitlich an der Palette 6 befestigte leistenförmige Tragprofil 28 weist einen U-förmigen Querschnitt mit zwei nach unten ragenden Schenkeln 33, 34 auf. An der Innenseite der Schenkel 33 und 34 ist jeweils eine Führungsfläche 35 ausgebildet, die beim Eingriff der Traghaken 25 in das Tragprofil 28 die Momente aufnehmen. Die senkrechten Kräfte werden von den oberen Planflächen der Traghaken 25 aufgenommen. Der an der Innenseite des Tragprofils 28 mittig angeordnete Führungsbolzen 32 hat einen Durchmesser, der der Breite der Führungsnut 27 im Drehkörper 24 entspricht. Beim Anheben der Paletten gelangt dieser Führungsbolzen zur Anlage in der Führungsnut 27 im Drehkörper 24 und gewährleistet somit eine seitliche Führung.

Der vorstehend beschriebene Palettenwechsler arbeitet wie folgt:
Zum Wechseln einer Palette wird der Werkstücktisch 5 über den Kreuzschlitten 4 entlang der Längsführung 3 in eine Wechselposition verfahren, in welcher die an der Palette 6 befestigten Tragprofile 28 mit den am Drehkörper 24 ausgebildeten und in der abgesenkten Stellung befindlichen Traghaken 25 fluchten. Durch Betätigung des Hydraulikzylinders 13 wird die Tragsäule 10 und mit ihr die Drehvorrichtung 16 angehoben, wobei die Tragprofile 25 und die Traghaken 28 miteinander in Eingriff gelangen. Mit fortschreitender Hubbewegung der Tragsäule 10 wird die am Werkstücktisch fixierte Palette 6 aus ihren Aufnahmeelementen ausgehoben, bis sie freitragend zusammen mit der in der Standby-Position befindlichen Palette an dem Drehkörper 16 hängt. Der seitlich an der Palette angeordnete und mittig innerhalb des leistenförmigen Tragprofils 28 angeordnete Führungsbolzen 32 greift in die vertikale Führungsnut 27 am Drehteil 24 ein und verhindert somit eine mögliche seitliche Verschiebung der Paletten beim Schwenkvorgang. Durch Ansteuerung der Zylindereinheit 22 erfolgt über den Zahnantrieb 20, 21 eine Verdrehung des Drehkörpers 24 um 180°, wobei ein berührungsfreier Positionswechsel der beiden Paletten erfolgt. Anschließend wird die Tragsäule 10 abgesenkt und die Führungsbolzen 7 an den Paletten gelangen in Eingriff mit den Aufnahmeelementen am Werkstücktisch 5.

Die Erfindung ist nicht auf die dargestellte Ausführungsform beschränkt. So können die hydraulisch betätigten Stellglieder durch andere geeignete Antriebsvorrichtungen, wie z. B. Elektromotore, ersetzt werden. Ferner kann bei Palettenwechslern für konstruktiv anders ausgebildete Werkzeugmaschinen, die eine günstigere Anordnung des Palettenwechslers ermöglichen, auf die kragförmige Ausführung des Drehantriebs verzichtet werden, wobei der Drehkörper beispielsweise direkt auf der vertikal beweglichen Tragkonstruktion befestigt sein könnte.

## Patentansprüche

1. Palettenwechsler für Werkzeugmaschinen (1) mit einem zwischen dem Werkstücktisch (5) und einer Standby-Position angeordneten Drehkörper (24), der an seinen diametral gegenüberliegenden Seiten Halteelemente (25) zur formschlüssigen und lösbaren Befestigung einer Palette (6) aufweist und der zum Transport der Palette (6) zwischen der Aufspannposition auf dem Werkstücktisch (5) und der Standby-Position vertikal verschiebbar und um die Vertikalachse (17) verdrehbar ist,
dadurch **gekennzeichnet,**
daß zur freitragenden Halterung der Paletten (6) an den Längsseiten des Drehkörpers (24) leistenförmige Ansätze (25) mit einer oberen Tragfläche angeordnet sind und daß an jeder Palette (6) ein seitliches U-förmiges Tragprofil (28) befestigt ist, dessen beide Schenkel (33, 34) beim Eingriff der leistenförmigen Ansätze (25) in das Tragprofil (28) die Momente aufnehmen.

2. Palettenwechsler nach Anspruch 1,
dadurch gekennzeichnet,
daß am Drehkörper (24) vertikale Führungsnuten (27) ausgebildet sind, in welche beim Anheben jeweils ein an den Tragprofilen (28) angeordneter Führungsbolzen (32) eingreift.

3. Palettenwechsler nach einem der Ansprüche 1 oder 2,
dadurch gekennzeichnet,
daß der Drehkörper (24) drehfest mit einer am freien Ende eines Kragarms (16) drehbar gelagerten Antriebswelle (23) verbunden ist.

4. Palettenwechsler nach Anspruch 3,
dadurch gekennzeichnet,
daß der Kragarm (16) auf einer zwischen zwei Endlagen vertikal verstellbaren Tragsäule (10) angeordnet ist.

5. Palettenwechsler nach Anspruch 4,
dadurch gekennzeichnet,
daß die Tragsäule (10) in einer an der Maschine angeordneten Tragkonstruktion (9) motorisch heb- und absenkbar geführt ist.

6. Palettenwechsler nach Anspruch 3,
dadurch gekennzeichnet,
daß die Antriebswelle (23) über einen am Tragarm (16) angeordneten hydraulisch betätigten Zahnantrieb (20, 21) angetrieben wird.

## Claims

1. A pallet changer for machine tools (1), comprising a rotary member (24) disposed between a standby position and a machine table (5) and, at diametrically opposite sides, bearing retaining elements (25) for positive, releasable fastening of a pallet (6), the rotary member being movable and rotatable around its vertical axis (17) so as to convey the pallet (6) between the standby position and the clamped position on the workpiece table (5),
characterised in that
for the purpose of holding the pallets (6) in an overhanging position, strip-like attachments (25) having an upper bearing surface are disposed on the longitudinal sides of the rotary member (24) and
a lateral U-shaped sectional bearing member (28) is secured to each pallet (6) and has two arms (33, 34) which receive the torque when the strip-like attachments (25) engage in the bearing member (28).

2. A pallet changer according to claim 1, characterised in that the rotary member (24) is formed with vertical guide grooves (27) in which a guide pin (32) disposed in each bearing member (28) engages during lifting.

3. A pallet changer according to claim 1 or 2, characterised in that the rotary member (24) is non-rotatably connected to a drive shaft rotatably mounted on the projecting end of a bracket (16).

4. A pallet changer according to claim 3, characterised in that the bracket (16) is disposed on a bearing column (10) vertically adjustable between two end positions.

5. A pallet changer according to claim 4, characterised in that the bearing column (10) is guided in a bearing construction (9) disposed on the machine so as to be lifted and lowered by a rotor.

6. A pallet changer according to claim 3, characterised in that the drive shaft (23) is driven via a hydraulic toothed drive (20, 21) disposed on the arm (16).

## Revendications

1. Changeur de palette pour machines-outils (1) comprenant un corps tournant (24) agencé entre la table porte-pièce (5) et une position d'attente, et qui présente, sur ses côtés diamétralement opposés, des éléments supports (25) destinés à la fixation par sûreté de forme et démontable d'une palette (6), et qui, pour le transport de la palette (6) entre la position d'ablocage sur la table porte-pièce (5) et la position d'attente, peut se déplacer en translation verticale et en rotation autour de l'axe vertical (17),
caractérisé
en ce que, pour tenir les palettes (6) en porte-à-faux, il est prévu des saillies (25) en forme de réglette munies d'une surface porteuse supérieure le long des bords longitudinaux du corps tournant (24), et en ce qu'à chaque palette (6) est fixé un profilé porteur (28) latéral en forme de U, dont les deux branches (33, 34) absorbent les couples lors de l'entrée en prise des saillies (25) en forme de réglette dans le profilé porteur (28).

2. Changeur de palette selon la revendication 1,
caractérisé
en ce que, sur le corps tournant (24) sont formées des rainures de guidage (27) dans lesquelles une tige de guidage (32) agencée sur les profilés porteurs (28) s'engage lors du soulèvement.

3. Changeur de palette selon une des revendications 1 et 2,
caractérisé
en ce que le corps tournant (24) est relié solidairement en rotation à un arbre d'entraînement (23) monté mobile en rotation à l'extrémité libre d'un bras en porte-à-faux (16).

4. Changeur de palette selon la revendication 3,
caractérisé
en ce que le bras en porte-à-faux (16) est monté sur une colonne porteuse (10) qui peut se déplacer verticalement entre deux positions extrêmes.

5. Changeur de palette selon la revendication 4,
caractérisé
en ce que la colonne porteuse (10) est guidée dans une structure porteuse (9) agencée contre la machine, de manière à pouvoir monter et descendre sous la commande d'un moteur.

6. Changeur de palette selon la revendication 3,
caractérisé
en ce que l'arbre d'entraînement (23) est entraîné par l'intermédiaire d'un mécanisme à engrenage (20, 21) actionné hydrauliquement, agencé sur le bras en porte-à-faux (16).
